# EUROPEAN PATENT APPLICATION

(11) **EP 2 445 079 A1**
(43) Date of publication of application: **25.04.2012**
(21) Application number: 10188284.3
(22) Date of filing: 20.10.2010
(51) Int. Cl.: H02J 7/00, G06F 1/16

(54) **Charger for an electronic device**

(71) Applicant: Research in Motion Limited, Waterloo, Ontario N2L 3W8 (CA)
(72) Inventor: Rich, David Gerard, Waterloo, Ontario N2L 5R9 (CA); Winger, Lyall Kenneth, Waterloo, Ontario N2L 5R9 (CA); Gondosch, Robert Michael Philip, Waterloo, Ontario N2L 5R9 (CA); Bastow, James, Waterloo, Ontario N2L 5R9 (CA)
(74) Representative: Moore, Barry

(57) **Abstract**

Some embodiments herein relate to a charger (10) for an electronic device (18). The charger (10) comprises a power output port (12), a charging dock (14) and a power module (16). The power output port (12) is adapted to be electrically connected to and provide power to the electronic device (18). The charging dock (14) is adapted for receiving and charging at least one battery. The charging dock (14) comprises at least one removable cradle (20) to accommodate receipt and charging of batteries of various shapes.

## Description

The present disclosure relates generally to chargers for portable electronic devices.

Electronic devices such as mobile phones, Personal Digital Assistants (PDAs), notebooks and portable video games have become devices that are commonly used. Each electronic device often comes with its own accessories, for example a charger, a battery pack, a docking station, peripherals and peripheral connectors, which are often manufacturer and model specific. For example, a charger designed for a particular model of smart phone may not be compatible with other manufacturer's devices or with different models from the same manufacturer.

### GENERAL

Although electronic devices are often designed to be easily carried, carrying the accessories for one or more electronic devices can be cumbersome. The challenge can be compounded if each of the electronic devices uses a particular charger. This may require a user to carry a number of different chargers that are compatible with different devices that the user may be carrying. Accordingly, it may be useful to provide a charger that is adapted to conveniently charge one or more electronic devices, or one or more batteries, or any combination thereof, using one or more power sources.

In accordance with a first aspect, the charger may comprise a power output, a charging dock and a power module. The power output may electrically connect to the electronic device and provides power thereto. The charging dock receives and charges at least one battery. The charger may also comprise at least one removable cradle electrically connectable to the charging dock, the at least one removable cradle being adapted to accommodate receipt and charging of batteries of various shapes. The power module may provide power to the power output and the charging dock.

In another aspect, the charger may comprise a docking port, a power output port, a charging dock, a power module and a peripheral module. The docking port may have electrical contacts and be adapted for electrically connecting to the electronic device. The power output port may connect and provide power to the electronic device. The charging dock may receive and charge at least one battery. The charging dock may also comprise at least one removable cradle adapted to accommodate receipt and charging of batteries of various shapes, sizes, or both. The power module may provide power to the power output port and the charging dock, and comprises a plurality of electrical power sources. The peripheral module electrically may connect to at least one peripheral and provides an interface between the electronic device and the at least one peripheral.

The embodiments herein may be adapted to charge an electronic device using at least one of a plurality of power sources. In some embodiments, the electronic device could comprise, but is not limited to, a mobile phone, a Personal Digital Assistant (PDA), a notebook, a portable video game such as for example a PlayStation Portable™, or any other portable electronic device.

In general, each electronic device may comprise a power supply that is chargeable (as used herein, "chargeable" includes the concepts of "initially chargeable" and "rechargeable"). Consequently, when "charging a portable electronic device" is discussed, typically the component of the portable electronic device being charged is the power supply.

The power sources used to charge the portable electronic device could be any of several supplies of power, such as a fuel cell, piezoelectric elements, solar elements, an AC adapter, a DC adapter, a USB adapter, a replaceable battery, a non-replaceable battery, or any other power source suitably adapted to provide electricity of voltage and current appropriate for charging the portable electronic device, whether solely or concurrently with other devices.

In addition to charging the portable electronic device, the charger may be further adapted to simultaneously or separately (or both) charge one or several batteries of various shapes and sizes. As will be described below, this charging can be accomplished by interfaces designed to mate with each battery, or through the use of one or more removable inserts (or cradles) that enable a battery to mate with an interface.

### BRIEF DESCRIPTION OF THE DRAWINGS

Embodiments of the present disclosure will now be described, by way of example only, with reference to the attached figures, wherein:

Figure 1 is a schematic representation of a charger according to one aspect;

Figure 2 is a schematic representation of a charger according to another aspect;

Figure 3 is a schematic representation of a number variants of cradles or inserts which may be used with the chargers shown in Figures 1 and 2; and

Figure 4 is a schematic representation of stackable cradles or inserts.

### DETAILED DESCRIPTION

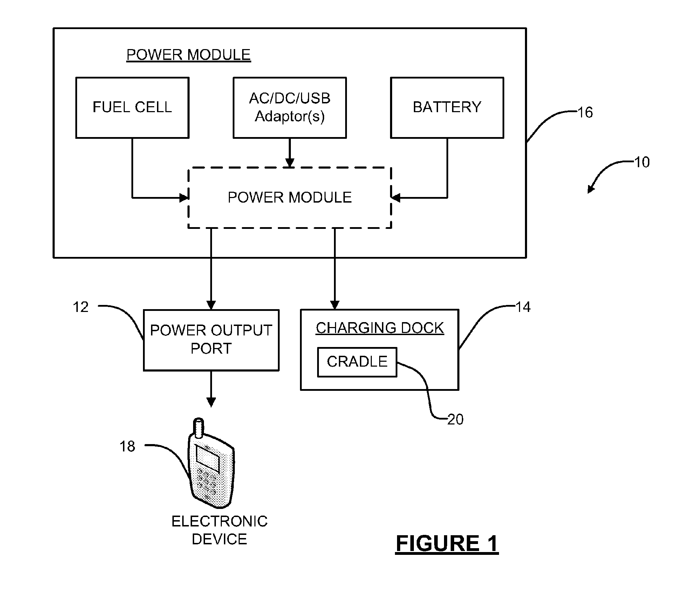

Reference is now made to Figure 1, which is a schematic representation of a first aspect of the charger 10 according to one embodiment. The charger 10 comprises a power output port 12, a charging dock 14 and a power module 16. The power output port 12 is sized and shaped to be electrically connected to the electronic device 18 and charge the electronic device 18.

In general, two elements are "electrically connected to one another when a change in an electrical attribute of one (such as its relative voltage or the current flowing through it) results in a corresponding change in an electrical attribute of the other. Two elements can be electrically connected even if they are not proximate to one another. Two elements can be electrically connected when they are not physically connected or touching one another, for example, when there is a conductive element interposed between them.

In some embodiments, the power output port 12 may also provide power to the electronic device 18 such that the electronic device 18 may function without drawing power from its own power pack when the electronic device 18 is connected to the power output port 12.

Generally, the power output port 12 may be of any shape and size that is suitable to electrically connect to the portable electronic device 18. For example, the power output port 12 may use a standardized power connector or a proprietary power connector (or both).

The charging dock 14 is sized and shaped for receiving and charging one or more batteries. The charging dock 14 may be operable to charge each battery on an individual basis, or to concurrently charge a plurality of batteries. The charging dock 14 has a removable cradle 20 (or insert) to accommodate receipt and charging of batteries of various shapes and sizes and electrical tab configurations.

In some embodiments, the cradle 20 may be removable (e.g. attachable and detachable from the charging dock 14) without requiring the use of tools.

The cradle 20 can enable a particular battery, which by its configuration (e.g. size, shape, and location of electrical tabs) might ordinarily not be able to mate with the charging dock 14, to adapt to and mate with the charging dock 14. For example, one cradle might enable a battery with left-side terminals to mate to the charging dock 14, and a different cradle may enable a battery with top-end terminals to mate to the charging dock 14. Examples of various cradles are further described herein.

The power module 16 provides power to the power output port 12 and the charging dock 14. For doing so, the power module 16 may include one or more electrical power sources, such as a fuel cell, an AC adapter, a DC adapter, a USB adapter, a battery, a piezo, a solar cell or any other power source.

In some embodiments, the power module 16 may be adapted to modulate the electrical power delivered to the power output port 12 and the charging dock 14 so as to correspond to the electrical needs of the electronic device 18 and the batteries that are being charged separately or concurrently by the charging dock 14.

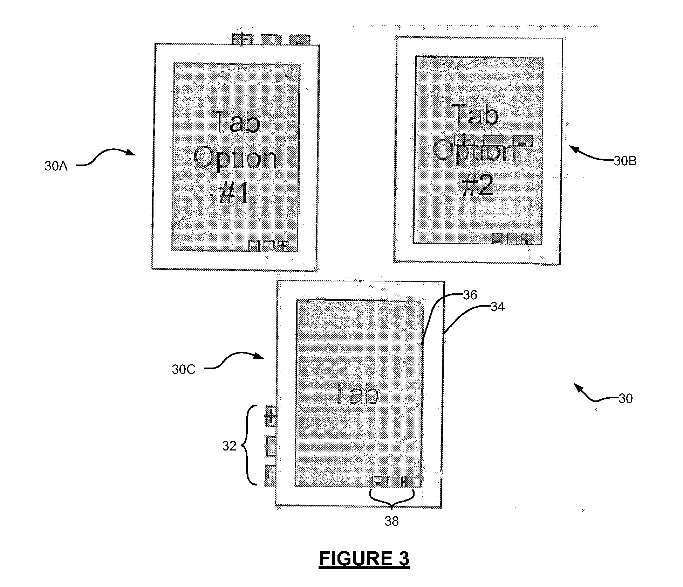

Reference is now made to Figures 1 and 3, where Figure 3 is a schematic representation of a number of exemplary variants of cradles (or inserts) for use with a charging dock such as the charging dock 14. The cradles are referred to generally by reference numeral 30, namely a first cradle 30A, a second cradle 30B, and a third cradle 30C.

The concepts described herein are not limited to any particular manner by which cradles 30 can electrically interface with the charging dock 14. For example, one of the cradles (e.g. the third cradle 30C) can be embedded in the charging dock 14, surface mounted thereon, or separated therefrom but adapted to be electrically connected thereto.

For the variants where the cradles 30 are embedded or surface mounted on the charging dock 14, the charging dock 14 may be provided with electrical tabs in one or several positions.

As such, the electrical tabs 32 of the cradles 30 can be located in various locations at an exterior portion thereof (as shown by inspection of the first cradle 30A, the second cradle 30B, and the third cradle 30c), and are aligned with at least one set or electrical tabs in the charging dock, to provide electrical contact there between. Thus the electrical tabs 32 of the inserts could be located on any outside wall of each cradle 30, which is located such that it can be coupled in direct electrical contact with the charging dock 14.

To ensure proper electrical contact between the cradles 30 and the charging dock, an outside perimeter 34 of each cradle 30 may be designed so as to fit snugly or be properly aligned within the charging dock 14. Thus, the cradles 30 may be of various shapes and sizes, while having exterior electrical tabs 32 that are aligned and sized and shaped so as to be capable of being electrical connected with corresponding electrical tabs of the charging dock. Each of the cradles 30 may be sized and shaped for a snug fit within the charging dock 14.

The cradles 30 may further define an interior perimeter 36 corresponding to a battery to be received, as shown on the third cradle 30C. The interior perimeter 36 could correspond to various battery sizes, such as for example: A, AA, AAA, AAAA, B, C, D, prismatic, packs, etc.

The interior parameter 36 may further comprise interior electrical tabs 38 aligned with electrical tabs of the battery it is adapted to receive. Electricity between the exterior electrical tabs 32 and the interior electrical tabs 38 may be rerouted within the cradles 30.

By providing cradles 30 adapted to receive batteries of different shapes and sizes, it may be possible to recharge (through the charging dock 14) additional batteries used in the electronic device 18 or in any other electronic devices 18 that are not currently electrically connected to the charger 10.

In some embodiments, each cradle or insert may further be identified by the charging dock and power module to provide battery authentication. Upon battery authentication by the charging dock, the power module may adapt the charging rate to correspond to allow up to the maximum manufacturer suggested charge rate or another desired charge rates.

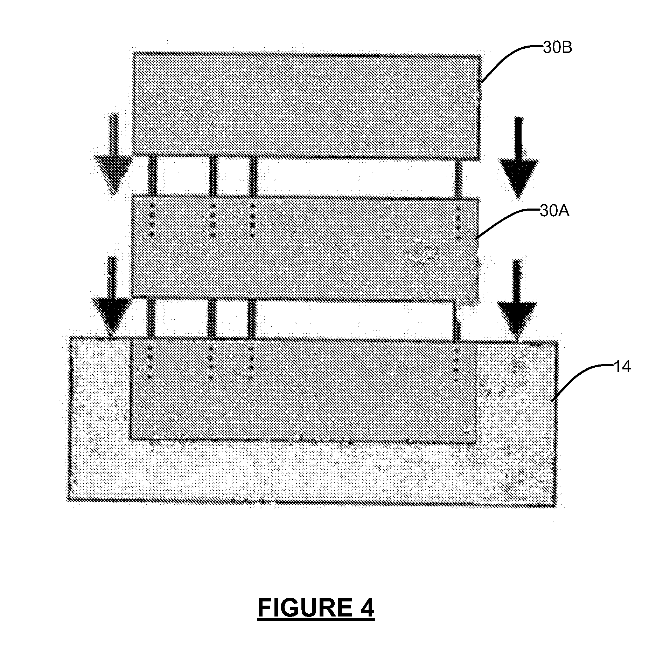

Reference is now made concurrently to Figures 1, 3 and 4. Illustrated in Figure 4 is a schematic representation of stackable cradles or inserts 30. Cradles 30 may further be adapted to be stacked, for example, as shown in Figure 4. The charging dock 14 receives a first cradle 30A and a second cradle 30B is stacked on top of the first cradle 30A.

To accommodate this arrangement, the exterior electrical tabs 32 of the inserts may be located on an under surface of the cradles 30. In addition, each cradle 30 may be provided with corresponding tabs to provide electricity to the exterior electrical tabs 32 of the insert stacked thereon. By stacking multiple cradles 30 (e.g. the first cradle 30A and second cradle 30B), it may be possible to charge simultaneously multiple batteries of different sizes.

Stacking alignment could be obtained by any of various techniques such as pins, magnets, "puzzle pieces", etc., and any structural features may be employed to align the various cradles 30 or releasably hold them together.

In some embodiments, the charging rate of the battery or batteries is adjusted by the charging dock 14, or alternately by the power module 16.

In some embodiments, the charging rate may be adjusted arbitrarily by the power module 16, or upon battery authentication.

In some embodiments, the process of battery authentication may be initiated by the charging dock 14 and based on the cradle(s) used. Each cradle 30 may be associated to a particular type of battery, and may be accompanied by a charging algorithm in the power module. Thus, upon detection by the charging dock 14 of the cradle(s) placed therein (e.g. the first cradle 30A and the second cradle 30B), the charging dock 14 may inform the power module 16 of the type of battery(ies) so as to the power module 16 may perform charging accordingly. In some embodiments, the charging algorithm may be implemented by the cradle 30.

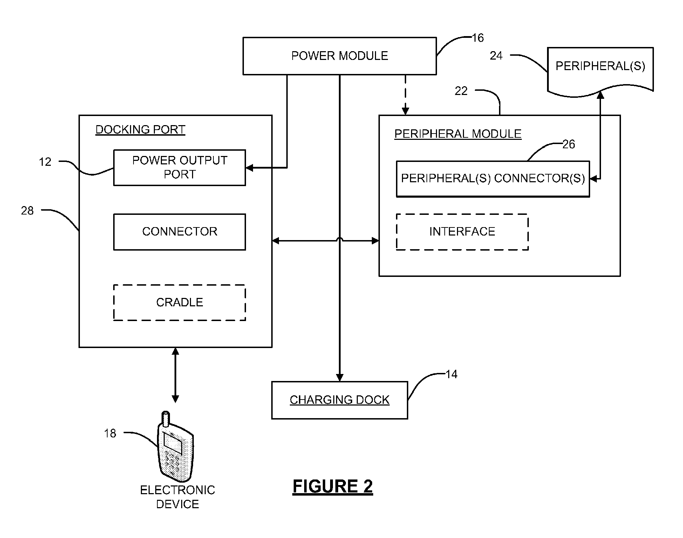

Reference is now made to Figure 2, which depicts a schematic representation of another aspect of the charger 10.

In this aspect, the charger 10 may further comprise a peripheral module 22 adapted to electrically connect to at least one peripheral 24 and provide an interface between the electronic device 18 and the at least one peripheral 24. To electrically connect to at least one peripheral 24, the peripheral module 22 may include one or more of the following connectors 26: an 8P8C connector, a D-subminiature electrical connector, a USB connector, a mini USB connector, a R-TNC connector, a BNC connector, an Ethernet cable, an analog video connector, a WIFI transmitter, a WiMAX transmitter, a Bluetooth transmitter, or any other suitable physical or wireless connector.

The charger 10 may further comprise a docking port 28. The docking port 28 may be adapted for electrically connecting to the electronic device 18 and for connecting the electronic device 18 to the peripheral module 22. The docking port 28 may further define a cradle for the electronic device 18, and may embed the power output port 12 therein for convenient electrical charging and electronic connection with the electronic device 18.

Some embodiments as described herein may provide one or more benefits. For example, some embodiments may allow for greater flexibility when electrically connecting one or more chargers with one or more electronic devices. This may reduce operational costs (since each charger may be more versatile and be operable with multiple electronic devices, thus reducing the number of chargers required to operate multiple electronic devices). This may also lead to reductions in space requirements, which may be particularly advantageous, for example, when a user is traveling with multiple electronic devices and may not want to travel with a separate charger for each electronic device.

While the above description provides examples of one or more processes or apparatuses, it will be appreciated that other processes or apparatuses may be within the scope of the accompanying claims.

## Claims

1. A charger (10) comprising:
a power output port (12) adapted to be electrically connected and provide power to an electronic device (18);
a charging dock (14) adapted to receive and charge at least one battery, the charging dock (14) comprising at least one removable cradle (20) to accommodate receipt and charging of batteries of various shapes; and
a power module (16) adapted to provide power to the power output port (12) and the charging dock (14).

2. The charger (10) of claim 1, wherein the power module (16) comprises a plurality of electrical power sources.

3. The charger (10) of claim 2, wherein the plurality of electrical power sources comprises at least two of the following: a fuel cell, an AC adapter, a DC adapter, a USB adapter and a battery.

4. The charger (10) of any preceding claim, further comprising a docking port (28) adapted to electrically connect to the electronic device (18), and a peripheral module (22) adapted to electrically connect to at least one peripheral (24) and provide an interface between the at least one peripheral and the electronic device (18).

5. The charger (10) of claim 4, wherein the docking port (28) further defines a cradle for the electronic device.

6. The charger (10) of claim 4 or claim 5, wherein the power output port (12) is embedded within the docking port (28).

7. The charger (10) of any preceding claim, wherein the peripheral module further comprises at least one of the following connectors: an 8P8C connector, a D-subminiature electrical connector, a USB connector, a mini USB connector, a R-TNC connector, a BNC connector, an Ethernet cable, and an analog video connector, a WIFI antenna, and a WiMAX antenna.

## Amended claims

### Amended claims in accordance with Rule 137(2) EPC.

**1.** A charger (10) comprising:
a power output port (12) adapted to be electrically connected and provide power to an electronic device (18);
a charging dock (14) adapted to receive and charge a plurality of batteries, the charging dock (14) comprising a plurality of removable stackable cradles (30) to accommodate receipt and charging of the plurality of batteries, including a first cradle (30A) adapted to charge a first battery and a second cradle (30B) stackable on top of the first cradle (30A) and the first battery, the second cradle (30B) adapted to charge a second battery; and
a power module (16) adapted to provide power to the power output port (12) and the charging dock (14).

**2.** The charger (10) of claim 1, wherein the power module (16) comprises a plurality of electrical power sources.

**3.** The charger (10) of claim 2, wherein the plurality of electrical power sources comprises at least two of the following: a fuel cell, an AC adapter, a DC adapter, a USB adapter and a battery.

**4.** The charger (10) of any preceding claim, further comprising a docking port (28) adapted to electrically connect to the electronic device (18), and a peripheral module (22) adapted to electrically connect to at least one peripheral (24) and provide an interface between the at least one peripheral and the electronic device (18).

**5.** The charger (10) of claim 4, wherein the docking port (28) further defines a cradle for the electronic device.

**6.** The charger (10) of claim 4 or claim 5, wherein the power output port (12) is embedded within the docking port (28).

**7.** The charger (10) of any preceding claim, wherein the peripheral module further comprises at least one of the following connectors: an 8P8C connector, a D-subminiature electrical connector, a USB connector, a mini USB connector, a R-TNC connector, a BNC connector, an Ethernet cable, and an analog video connector, a WIFI antenna, and a WiMAX antenna.
